(19) Europäisches Patentamt
European Patent Office
Office européen des brevets

(11) **EP 2 738 566 A1**

(12) **EUROPEAN PATENT APPLICATION**
published in accordance with Art. 153(4) EPC

(43) Date of publication:
**04.06.2014 Bulletin 2014/23**

(51) Int Cl.:
*G01S 7/34* *(2006.01)*

(21) Application number: **12817806.8**

(22) Date of filing: **25.07.2012**

(86) International application number:
**PCT/JP2012/004750**

(87) International publication number:
**WO 2013/014931 (31.01.2013 Gazette 2013/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.07.2011 JP 2011163120**

(71) Applicant: **JAPAN RADIO CO., LTD**
**Mitaka-shi**
**Tokyo 181-8510 (JP)**

(72) Inventors:
• **SAKAMOTO, Hironori**
**Mitaka-shi**
**Tokyo 181-8510 (JP)**

• **NIIMURA, Shigeyuki**
**Mitaka-shi**
**Tokyo 181-8510 (JP)**
• **YAMAGATA, Junji**
**Mitaka-shi**
**Tokyo 181-8510 (JP)**
• **NISHIDA, Keizo**
**Mitaka-shi**
**Tokyo 181-8510 (JP)**

(74) Representative: **Vigand, Philippe et al**
**Novagraaf International SA**
**3 chemin de l'Echo**
**1213 Onex Geneva (CH)**

(54) **RADAR RECEIVER**

(57) The object of the present invention is to provide a radar receiver that can steadily and reliably detect the target in the close zone without largely complicating the construction compared to the conventional radar apparatuses. The radar receiver according to the present invention comprises a receiving unit 15 that detects or modulates a received wave for detecting a target, the received wave arriving from the target in response to a transmitting wave transmitted towards the target, and a control unit 19 that sets a gain of the receiving unit 15 to a value at which the receiving unit is prevented from falling into a saturation region by a component of the transmission wave that wraps around the receiving unit 15 through an aerial system used for transmission of the transmission wave during a period in which the transmission wave is being transmitted.

FIG.1

EP 2 738 566 A1

# Description

## {TECHNICAL FIELD}

The present invention pertains to a radar receiver adapted to detect or demodulate a received wave arrived from a target in response to a transmission wave for detection of the target.

## {BACKGROUND ART}

In recent years, there are many radar apparatuses being achieved with solidification, power saving, reduction in size and weight, by applying highly developed semiconductor technologies.
Further, with the lower cost realized by the development of technologies, radar apparatuses are mounted on small vessels and the like, and are being used in a wide variety of fields.
As the prior art relevant to the present invention, Patent Document 1 and Patent Document 2 listed below have been identified.
Patent Document 1 discloses a radar apparatus adapted to radiate a radio wave from an antenna via a circulator after passing an output signal of an oscillator through the transmission system, and to receive a reflection wave reflected from a target by the antenna to obtain a received signal through the circulator and the receiving system, in which a STC (Sensitivity Time Control) variable attenuator is inserted in the receiving system to set a maximum attenuation amount of the variable attenuator to such a value not to have the receiving system saturated even in a case that the receiving system is inputted with a maximum level of signal, so that the saturation of the receiving system due to the leakage of the transmission signal can be suppressed by maximizing the attenuation amount of the variable attenuator during a transmission period, thereby making it possible to receive the reflection wave immediately after the transmission.
Patent Document 2 discloses a radar system comprising: a radar apparatus adapted to radiate a radar transmission wave of the pulse train and to perform positioning of a moving target by receiving the reflection wave from the moving target; and a receive-only device provided at a position spaced from the radar apparatus, in which the receive-only device receives a superimposed signal consisting of a back lobe direct wave from a radar aerial of the radar apparatus and a reflection wave from the target during a period of transmitting the radar transmission wave, calculates the target position information by extracting a target reflection signal from the superimposed signal and sends the calculated position information to the radar apparatus, while the radar apparatus performs the detection and tracking of the target in the transmission blind region based on the position information received from the receive-only device, thereby making it possible to detect and track the target in the transmission blind region.

## {CITATION LIST}

### {PATENT LITERATURE}

Patent Document 1: Japanese Patent Application Publication No. 2001-174542
Patent Document 2: Japanese Patent Application Publication No. 2007-256009

## {SUMMARY OF INVENTION}

### {TECHNICAL PROBLEM}

Incidentally, the reception system of the conventional radar apparatus described above is likely to be saturated as the transmission pulse wraps around through the aerial system or the like, during the period in which a transmission pulse is transmitted to the region or area where the target can be located (Hereinafter, simply referred to as transmission period P).
Therefore, during the transmission period P, a received wave arrived as a reflection wave from the target which is located at a close point (hereinafter, simply referred to as "close target") cannot be distinguished from the transmission pulse wrapping around through the aerial system, so that such close target is excluded from the subject of radar signal processing performed for the aforementioned positioning and distance-measurement, and as a consequence, the positioning and distance-measurement is performed only on the target located in a range exceeding a product of a pulse width Wt of the transmission pulse and a propagation speed C of the transmission pulse, Wt x C / 2 (hereinafter, simply referred to as "far target"). Hereinafter, the area (region) not exceeding the range indicated by the aforementioned product (=Wt x C / 2) is simply referred to as "close zone" .
However, in the case that radar apparatus is the solidified as described above, the solidified radar apparatus generally cannot be set to have a peak power of the transmission pulse as large as the peak power of the transmission pulse in conventional radar apparatuses, and the width of the transmission pulse needed to be set to a very large value, so that the distance given as the aforementioned product (hereinafter simply referred to as "blind range") tended to be larger compared to the blind range of the conventional non-solidified radar apparatuses.
Therefore, there is a strong desire for solidified radar apparatuses to reliably detect the target in the close zone and to limit or solve the enlargement of the blind range.
Therefor the present invention has been made to overcome the previously mentioned conventional problems, and it is an object of the present invention to provide a radar receiver that can steadily and reliably detect the target in the close zone without largely complicating the construction compared to the conventional radar apparatuses.

{SOLUTION TO PROBLEM}

To achieve the previously mentioned object of the present invention, the radar receiver according to the present invention comprises, a receiving unit that detects or demodulates a received signal for detecting a target, the received signal arriving from the target in response to a transmission signal transmitted toward the target, and a control unit that sets a gain of the receiving unit to a value at which the receiving unit is prevented from falling into a saturation region by a component of the transmission signal that wraps around the receiving unit through an aerial system used for transmitting the transmission signal, during a period in which the transmission signal is being transmitted.

This means that, during the period in which the transmission wave is being transmitted, even though the transmission wave wraps around to the receiving unit through the aerial system, the receiving unit can detect or demodulate the receiving wave arrived from the target in response to the transmission wave, thereby making it possible to detect the target based on the result of the detection or demodulation of the received wave.

Further, the radar receiver according to the present invention comprises, a receiving unit that detects or demodulates a received signal for detecting a target, the received signal arriving from the target in response to a transmission signal transmitted toward the target, and a control unit that sets a gain of the receiving unit to a value at which detection or demodulation of the received signal arrived from the target in response to the transmission signal is performed in an active region, during a period in which the transmission signal is being transmitted.

This means that, during the period in which the transmission wave is being transmitted, even though the received wave that arrived in the aerial system from the target in response to the transmission wave is of high level, the receiving unit can detect or demodulate the receiving wave, thereby making it possible to detect the target based on the result of the detection or demodulation of the received wave.

The radar receiver according to the present invention may preferably be so constructed that the control unit sets the gain of the receiving unit to a value at which the receiving unit is prevented from falling into a saturation region by the receiving signal that arrives from the target in response to the transmission signal, during another period subsequent to the period in which the transmission signal is being transmitted.

Therefore, even in the period subsequent to the period in which the transmission wave is being transmitted, the receiving unit can flexibly adapt to either of the construction and property of the aerial system or the location and property of the target that can be positioned at the close point of the aerial system, thereby making it possible to detect or demodulate the received wave in the active region.

The radar receiver according to the present invention may preferably be so constructed to further comprise a level monitoring unit that monitors a level distribution of the received signal in all or a part of a range direction, a scan direction, and a sweep direction. The control unit may preferably set the gain of the receiving unit to a value at which detection or demodulation of the received signal is performed by the receiving unit in an active region under the level distribution of the received signal.

Therefore, the gain in the receiving unit is set and maintained to a value in which the receiving unit is prevented from falling into the saturated region and the value being practical and suitable for a geographical distribution, density, shape, size and the like of the target that can be positioned in the vicinity of the aerial system.

The radar receiver according to the present invention may preferably so constructed that the control unit sets the gain of the receiving unit to a constant value, during the period in which the transmission signal is being transmitted.

Accordingly, setting of the gain of the receiving unit during the period in which the transmission wave is being transmitted can be realized without complicated process or control.

{ADVANTAGEOUS EFFECT OF INVENTION}

The radar receiver according to the present invention can reliably detect the target, even though the distance of the target to the aerial system is equal to or less than a product of the length of the period in which the transmission wave is being transmitted and the propagation speed of the transmission wave.

Further, the radar receiver according to the present invention can reliably detect various kinds of targets without moving into a saturation region, not only during the period in which the transmission wave is being transmitted, but also during another period subsequent to the period in which the transmission wave is being transmitted.

Furthermore, the radar receiver according to the present invention can realize a reliable and steady detection of various kinds of targets located in the close point or in the vicinity thereof.

Still more, the radar receiver according to the present invention can simplify a structure of software and hardware being adapted to set a gain of a receiving unit, thereby making it possible to lower the cost and improve the reliability.

Therefore, a radar apparatus applying the present invention can improve the performance and reliability, so that the radar apparatus offers a flexible adaptation to various kinds of applications and fields.

{BRIEF DESCRIPTION OF DRAWINGS}

FIG. 1 is a block diagram showing one example of a construction of a radar apparatus provided therein with a radar receiver according to one embodiment of the present invention.

FIG. 2 is a view for explanation of operation of a radar apparatus provided therein with a radar receiver according to the present embodiment as shown in FIG. 1.

FIG. 3 is a view showing one example of a construction of an attenuation amount table.

{DESCRIPTION OF EMBODIMENTS}

The preferred embodiment of the radar receiver according to the present invention will hereinafter be described in detail with reference to the accompanying drawings.

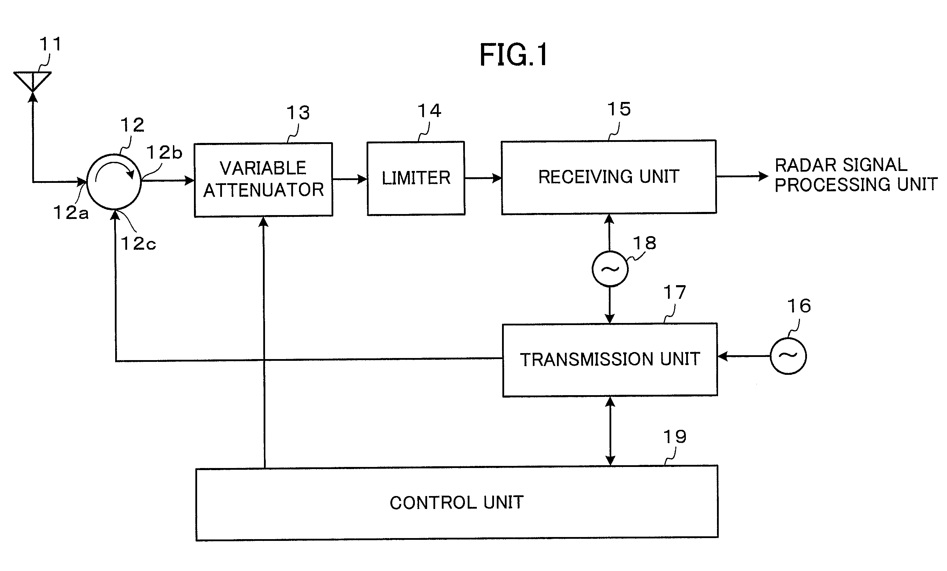

FIG. 1 is a view showing the construction of the radar apparatus provided therein with the radar receiver according to the present embodiment of the present invention.

In FIG.1, a power supply point of an antenna 11 is connected to a first opening 12a of a circulator 12, a second opening 12b of the circulator 12 is connected to a radar signal processing unit not shown through a variable attenuator 13, a limiter 14, and a receiving unit 15. An output port of an oscillator 16 is connected to a third opening 12c of the circulator 12 through a transmission unit 17, and each of a local oscillator input port of the transmission unit 17 and a local oscillator input port of the receiving unit 15 is connected to a corresponding output port of a local oscillator 18. Each of input/output ports of the transmission unit 17 is connected to a corresponding interruption port or input/output port of a control unit 19, and a certain output port of the control unit 19 is connected to an input port of a control terminal of the variable attenuator 13. Here, the variable attenuator 13 is adapted to be electronically varied with an attenuation amount at a desired speed and precision under control of the control unit 19.

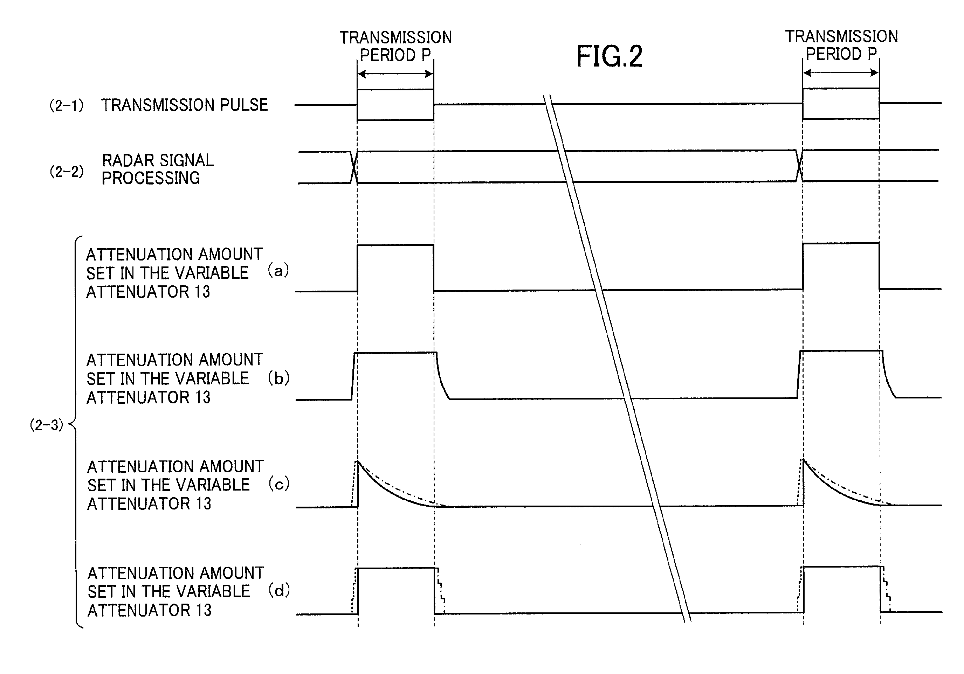

FIG. 2 is a view showing an operation of a radar apparatus provided with a radar receiver according to the present embodiment.

Hereinafter, an operation of the radar apparatus provided with the radar receiver according to the present invention will be described with reference to FIG. 1 and FIG. 2.

[Basic interaction among the units]

In the radar apparatus provided therein with the radar receiver according to the present invention as shown in FIG. 1 and FIG. 2, the units constituting the radar apparatus work in interaction as explained hereinafter, to realize the basic functions as a radar apparatus.

The transmission unit 17 is adapted to intermittently interrupt a propagation wave signal generated by the oscillator 16 with a pulse having a predetermined duty ratio, thereby generating a baseband transmission wave. The transmission unit 17 is adapted to convert a frequency of the baseband transmission wave based on the local oscillation signal generated by the local oscillator 18, thereby generating a transmission pulse. Here, the duty ratio to be applied is preliminarily set to a value suitable for a range or the like within which the target which is a subject of positioning or distance-measurement by the radar apparatus provided with the radar receiver according to the present invention can be located.

The transmission pulse thus generated is handed over to the antenna 11 through the circulator 12 and is radiated from the antenna 11.

The transmission pulse radiated from the antenna 11 is reflected by a target not shown, so that the reflection wave arriving back to the antenna 11 from the target is provided to by the receiving unit 15 through the circulator 12, the variable attenuator 13 and the limiter 14. Here, the limiter 14 is positioned in a previous stage of the receiving unit 15, thereby making it possible to prevent a failure or a deterioration of the receiving unit 15 due to an excessive level of the reflection wave and the transmission pulse to be inputted thereto.

The receiving unit 15 is adapted to take in the reflection wave thus provided and to detect heterodyne of the reflection wave based on the local oscillation signal provided by the local oscillator 18, thereby generating a baseband reflection wave.

Further, the receiving unit 15 is adapted to quadrature-demodulate the baseband reflection wave to generate two demodulation signals I, Q orthogonal to each other, thereby providing these demodulation signals I, Q to the above-mentioned radar signal processing unit. Here, the receiving unit 15 may employ not only the heterodyne detection but also any one of double super heterodyne detection or homodyne detection, and further the receiving unit 15 may employ any method of demodulation processing or signal judgment processing for generation of the demodulation signals I, Q.

The radar signal processing unit is adapted to perform a predetermined radar signal processing (including, such as for example, removal of sea surface refection, MTI (Moving Target Indicator) and the like) on the demodulation signals I, Q to generate an image signal to be displayed on a display screen of a radar indicator device not shown.

[Characteristic operations and effects of the present embodiment]

The present invention in the radar receiver according to the present embodiment can be characterized by the following two points:

(1) As shown in (2-2) in FIG.2, the aforementioned radar signal processing unit is adapted to perform above-mentioned radar signal processing by itself or under control of the control unit 19 even during the transmission period P as shown in (2-1) in FIG.2. (2) As shown in from (2-3)(b) to (2-3)(d) in FIG. 2, in which an attenuation amount is conceptually indicated, the attenuation amount by the variable attenuator 13 is set mainly by the control unit 19 as will be explained hereinafter. Here, (2-3)(a) in FIG.2 conceptually indicates the attenuation amount in a case in which a maximum attenuation amount is applied throughout an entire duration of the transmission period P of the transmission pulse.

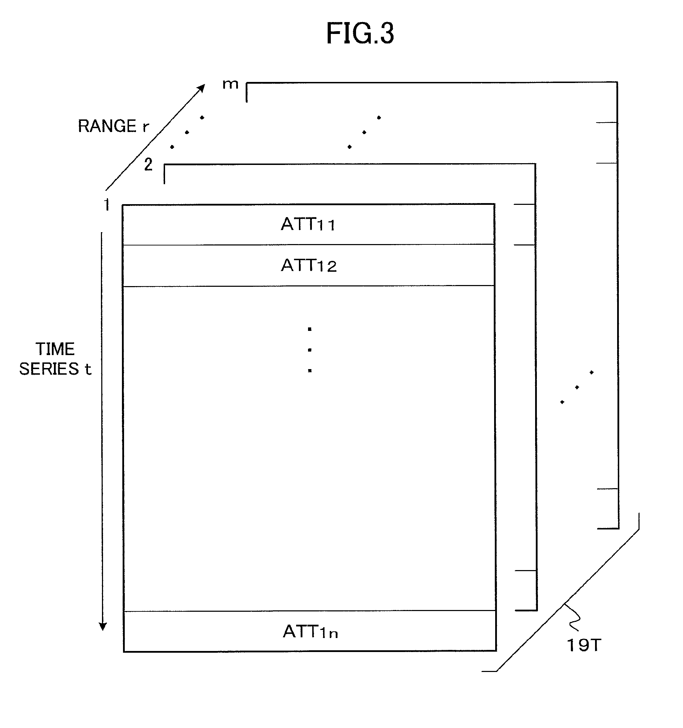

The control unit 19 has an attenuation amount table 19T therein as shown in FIG. 3. The attenuation amount table 19T, as shown in FIG.3, is preliminarily registered with an attenuation amount ATTrt to be set in the variable attenuator 13 in correspondence with a range r (= any one of 1 to m) and a width of the transmission pulse, the range r being the range within which positioning and distance-measurement of the target should be performed by the radar apparatus according to the present embodiment, the width of the transmission pulse being the width of the transmission pulse to be set in accordance with a sequence of a time series t (= any one of 1 to n) in synchronization with the transmission pulse. The range r and the time series t should be set in various ways: such as for example, dozens of meters for the range r, or a few micro seconds for the time series t.

The attenuation amount ATTrt is given by a mathematical formula as shown below, where Ls is a level of the transmission pulse outputted by the transmission unit 17, Li is an insertion loss of the circulator 12 and the limiter 14 in a section ranging from the output by the transmission unit 17 to the input by the receiving unit 15 by way of the circulator 12, the variable attenuator 13 and the limiter 14, and Lh is a level of the signal (or the transmission pulse) which is so excessive that the receiving unit 15 is moved from an active region to a saturation region in response to the signal being inputted into the receiving unit 15.

$$\mathrm{ATT\,rt} \approx \mathrm{Ls} - \mathrm{Lh} - \mathrm{Li}$$

Here, "saturation region" refers to a region in which the output is saturated to be limited to approximately a constant value against a change (i.e., increase) of input, due to an input/output characteristics of a circuit of amplifier or semiconductor elements in the receiving unit 15. On the other hand, "active region" refers to a region in which output changes in response to a change of input, as opposed to "saturation region".

Thus, the attenuation amount ATTrt registered in the attenuation amount table 19T satisfies all or a part of the requirements as described hereinafter.
(a) ATTrt is given as a monotone decreasing function (or a monotone non-increasing function) of time t (= 1 to n), per a range r (= 1 to m). {0047}
(b) The receiving unit 15 continues to operate in the active region or a linear region without moving into the saturated region throughout the entire duration of the transmission period P, even though the transmission pulse wraps around the receiving unit 15 from the output of the transmission unit 17 by way of the circulator 12, the variable attenuator 13 and the limiter 14. Here, "linear region" refers to a region in which the variation ratio (i.e., gradient) of output against input can be deemed approximately constant, within "active region". {0048}
(c) A surplus of a dynamic range of the receiving unit 15 is secured to an extent that a power of the reflection wave arrived from the target in the close zone is not unnecessarily attenuated throughout the entire duration of the transmission period P, even under a state in which the width of the transmission pulse (length of the transmission period P) is set to a large value in accordance with the range r or the like.

A target which is serving as a reflection source of a reflection wave large enough to have the receiving unit 15 saturated and is located in the close zone may, for example, be large warehouses standing along a shore of a port into which a vessel mounted thereon with the radar apparatus according to the present embodiment is entering.

The control unit 19 is adapted to repeat the operation as shown below in response to the radar apparatus provided therein with the radar receiver according to the present invention recognizing the range r to be operated on, thereby setting and appropriately updating the attenuation amount of the variable attenuator 13 in accordance with a sequence of a time series, for example, as shown in (2-3)(c) and (2-3)(d) in FIG.2.

(1) Specify a surface corresponding to the range r from out of surfaces in the attenuation amount table 19T (hereinafter referred to as specific surface).
(2) Identify a lapsed time from a head of the transmission period P (or a predetermined point in time preceding the head) to a tail of the transmission period P (or a predetermined point in time subsequent to the tail) as a discrete value i of any one of the aforementioned time t (= 1 to n).
(3) Provide the variable attenuator 13 with the ATTri stored in a record corresponding to the discrete value i from out of n records included on the specific surface.
(4) Repeat above processes (1) to (3) per every opportunity (period) during which the transmission pulse should be transmitted.

This means that the receiving unit 15 can continue to operate in a state as shown below, at last during the transmission period P irrespective of the length of the transmission period P (the width of the transmission pulse) and a peak power of the transmission pulse.

(1) Maintained in the active region or the linear region without being moved to the saturated region.
(2) Secured with the surplus in the dynamic range.

Therefore, according to the present embodiment, a target located in such a close point that the reflected wave in response to the transmission pulse transmitted in the transmission period P arrives back to the antenna 11 almost within the transmission period P, such as for example, a fast-moving small pirate ship located in the close zone, can be reliably and steadily detected under the radar signal processing by the aforementioned radar signal processing unit.

In the present embodiment, the attenuation amount ATTrt is not limited to values satisfying the aforementioned requirements (a) to (c). However, the attenuation amount ATTrt may, for example, be set to a value conforming to a radar equation including all or part of the items show below, so that the surplus of the dynamic range of the receiving unit 15 may be secured at a desired precision.

(1) gain of the antenna 11 (in the case that different antennas are used for transmitting the transmission pulse and for receiving the reflected wave, individual gain of each of the antennas)
(2) attenuation amount that the transmission pulse is attenuated in a section ranging from the output by the transmission unit 17 to the input by the receiving unit 15 by way of the circulator 12, the variable attenuator 13 and the limiter 14.
(3) transmission power, wave form, pulse width and wave length $\lambda$
(4) dynamic range of the receiving unit 15
(5) level of reflection wave arriving at antenna 11
(6) effective scattering cross-sectional area or a maximum value of the scattering cross-sectional area of the target that may be located in the close zone, per range (1 to m).

From above mentioned points of view, the values to be set as gains of the receiving unit or a receiving means, that allow the detection and the demodulation of the received wave arrived from the target in response to the transmission wave to be performed in the active region are determined not only by the aforementioned parameters but also the specifications as cited below.

(1) range in which the target object should be detected
(2) size, shape and other various attributes of the target object to be detected

(3) gains of the aerial system, orientation, transmission power (peak power), modulation method, pulse width, form of signal processing to be applied, gains of the receiving unit or receiving means.

Further, the aforementioned specifications and parameters are freely set in various ways as design items of the radar apparatuses. Therefore, for example, the properties as cited below or the like are taken into consideration when the specifications and parameters are determined.

(1) properties of propagation path formed between the aerial system and the target object that may be located at the close point
(2) size, reflection coefficient or the like of the target object
(3) level diagram, sensitivity or the like in the receiving unit in the radar apparatus.

Further, in the present embodiment, the attenuation amount ATTrt may be set by an approximate value or a row of approximate values as indicated by (2-3)(a) in FIG. 2, for example, as shown in solid line in (2-3)(b) in FIG. 2 or in solid line, dotted line or chained line in (2-3)(c) and (2-3)(d) in FIG.2, within a limitation that the surplus of the dynamic range of the receiving unit 15 can be secured in a desired precision, when the simplification of the construction of hardware and software required to set the attenuation amount ATTrt in variable attenuator 13 is necessary.

Further, in the present embodiment, the attenuation amount ATTr is set as a discrete value in accordance with a sequence of a time series under the aforementioned process performed by the control unit 19.

However, the attenuation amount ATTrt may be generated, for example, by an analog circuit constituted by a time constant circuit, a broken line approximation circuit or other circuit that generates a waveform in which an instantaneous value sharply rises at a leading edge of the transmission pulse and drops in accordance with a sequence of a time series.

Further, in the present embodiment, the attenuation amount ATTrt that enables the surplus of the dynamic range of the receiving unit 15 to be secured during the transmission period P is set in the variable attenuator 13 as a constant value.

However, the present invention is not limited to the construction as defined above, but for example, the variable attenuator 13 may also function as STC (Sensitivity-Time Control) by decreasing the attenuation amount ATTrt in stages on a time axis during the transmission period P as shown in (2-3)(c), in a case that the transmission pulse width is decreased in accordance with a sequence of the time series or an isolation in a section from output of the transmission unit 17 to input of the receiving unit 15 through the circulator 12, the variable attenuator 13 and the limiter 14 is sufficiently high. Here, both or either on of hardware and software constituting STC may be of any type.

Further, in the present embodiment, the attenuation amount set to the variable attenuator 13 per each transmission period P may not be constant, but, for example, the attenuation amount may be appropriately set and maintained to a value suitable for a distribution of reflected wave level arriving from range direction, scan direction or sweep direction, in a case that a number or distribution of the target objects in the near zone in all or a part of the range direction, scan direction or sweep direction is different from each other or not constant.

Furthermore, in the present embodiment, the setting of the attenuation amount to the variable attenuator 13 as described in the foregoing description may be continued not only during the transmission period P. The setting of the attenuation amount may, for example, begin at a predetermined point in time precedent to the transmission period P, as shown in (2-3)(b) in FIG. 2 in a solid line in a section precedent to the transmission period P or in (2-3)(c) and (2-3)(d) in FIG. 2 in a dotted line. And, the setting of the attenuation amount may, for example, be continued in a desired form until a predetermined point in time subsequent to the transmission period P, as shown in (2-3)(b) in FIG. 2 in a solid line in a section subsequent to the transmission period P or in (2-3)(c) and (2-3)(d) in FIG. 2 in a chain line.

Still further, in the present embodiment, the attenuation amount of the variable attenuator 13 during the transmission period P is set to a large value, thereby ensuring an operation of the receiving unit 15 in an active state during the transmission period P.

However, the radar receiver according to the present invention may be so constructed that the gains are appropriately set to all or a part of a plurality of stages constituting a circuit in lieu of the attenuation amount being set to the variable attenuator 13, in a case that the receiving unit 15 is not constituted by a single circuit but the receiving unit 15 is constituted by circuits of a plurality of stages serially connected and operated in a linear region.

Further, in the present embodiment, the antenna 11 is commonly used for transmitting the transmission pulse and for receiving the reflected wave arrived from the target, and a direction of a main lobe is switched in a predetermined speed and cycle.

However, the present invention is not limited to the construction as explained above, but the antenna 11 may be constituted by separate antennas or a pair of aerial systems each used for transmitting the transmission pulse or for receiving the reflected wave and each disposed in different location from each other.

Further, in the present invention, even in a case that antenna 11 is replaced by a signal generator or a simulated antenna adapted to output a radio wave equivalent to the aforementioned reflected wave, such signal generator or a simulated antenna can be applied.

Still further, in the present embodiment, any modulation method can be used for modulation of the reflected wave arrived from the target in the near zone of the antenna 11, and the receiving unit 15 may perform any demodulation processing or signal judgment suitable for extraction of original signal included in the transmission pulse as long as the process is in conformance to a desired modulation method.

Furthermore, the present invention can be applied not only to primary radar system but also to secondary radar system as well.

Further, the present invention is not limited to the positioning of the target (target object), but the present invention can be similarly applied to a radar apparatus for distance-measurement and detection of existence of the target.

Further, the present invention is not limited to the embodiments as described above, but the radar receiver according to the present invention may be constructed in various embodiments in the scope of the present invention, and all or a part of the components may be provided with any improvement.

Radar receivers having the features of the present invention will be cited hereinafter. However, the present invention is not limited to the radar receivers having the constructions as explained hereinafter.

The radar receiver according to the present invention in the present embodiment comprises: a receiving unit adapted to detect or demodulate a received wave for detecting a target, the received wave arriving from the target in response to a transmission wave transmitted toward the target; and a control unit adapted to set a gain of the receiving unit to a value at which the receiving unit is prevented from falling into a saturation region by a component of the transmission wave that wraps around the receiving unit through an aerial system used for transmitting the transmission wave, during a period in which the transmission wave is being transmitted.

The radar receiver according to the present invention in another embodiment comprises: a receiving unit adapted to detect or demodulate a received wave for detecting a target, the received wave arriving from the target in response to a transmission wave transmitted toward the target; and a control unit adapted to set a gain of the receiving unit to a value at which detection or demodulation of the received wave arrived from the target in response to the transmission wave is performed in an active region, during a period in which the transmission wave is being transmitted.

The radar receiver according to the present invention in the present embodiment or another embodiment may preferably so constructed that the control unit is adapted to set the gain of the receiving unit to a value at which the receiving unit is prevented from falling into a saturation region by the receiving wave that arrives from the target in response to the transmission wave, during another period subsequent to the period in which the transmission wave is being transmitted.

The aforementioned radar receiver may preferably further comprising a level monitoring unit adapted to monitor a level distribution of the received wave in all or a part of a range direction, a scan direction, and a sweep direction, and in which the control unit is adapted to set the gain of the receiving unit to a value at which detection or demodulation of the received wave is performed by the receiving unit in an active region under the level distribution of the received wave.

The aforementioned radar receiver may preferably so constructed that the control unit is adapted to set the gain of the receiving unit to a constant value, during the period in which the transmission wave is being transmitted.

Further, the aforementioned radar receiver may preferably so constructed that the control unit is adapted to set the gain of the receiving unit to a constant value, during each period in which the transmission wave is being transmitted.

In the radar receiver according to the present invention, setting of the gain in the receiving unit per each period in which the transmission wave is being transmitted can easily be realized without complicated processing or control.

Therefore, the construction of hardware and software involved in the setting of the gain in the receiving unit can be simplified, to improve reliability accompanied by cost reduction.

In the aforementioned radar receiver according to the present embodiment, the gain of the receiving unit set by the control unit encompasses values suitable for all or a part of the gain in aerial system, the attenuation amount of the transmission wave wrapped around to the receiving unit through the aerial system, the power, wave form, pulse width of the transmission wave, the dynamic range of the receiving unit and the power of the received wave that arrives or may arrive from the target in response to the transmission wave.

In the radar receiver according to the present embodiment, the gain set in the receiving unit during the period in which the transmission wave is being transmitted encompasses values practical for the construction, property, specification and performance of the aerial system of the radar apparatus applying the present invention and the disposition, shape, size or the like of the target that may be located around the aerial system.

Therefore, a radar apparatus applying the present invention can improve the performance and reliability, so that the radar apparatus offers a flexible adaptation to various kinds of applications and fields.

Further, in the aforementioned radar receiver according to another embodiment, the gain of the receiving unit set by the control unit encompasses values suitable for all or a part of the power, wave form, pulse width of the transmission wave, the dynamic range of the receiving unit and the power of the received wave that arrives or may arrive from the target in response to the transmission wave.

In the radar receiver according to the present embodiment, the gain set in the receiving unit during the period in which the transmission wave is being transmitted encompasses values practical for the construction, property, specification and performance of the radar apparatus applying the present invention and the disposition, shape, size or the like of the target that may be located around the radar apparatus.

Therefore, a radar apparatus applying the present invention can improve the performance and the reliability, so that the radar apparatus offers a flexible adaptation to various kinds of applications and fields.

In any one of the radar receivers, the control unit may also constitute an STC of the radar apparatus mounted on the radar receiver.

The radar receiver as defined in the foregoing description can be realized without largely complicating the hardware construction, by having the control unit shared by the STC.

Therefore, the construction of hardware and software involved in the setting of the gain in the receiving unit can be simplified, to improve reliability accompanied by cost reduction.

{EXPLANATION OF REFERENCE NUMERALS}

11: antenna
12: circulator
13: variable attenuator
14: limiter
15: receiving unit
16: oscillator
17: transmission unit
18: local oscillator
19T: attenuation amount table
19: control unit

**Claims**

1. A radar receiver, comprising:

   a receiving unit that detects or demodulates a received signal for detecting a target, the received signal arriving from the target in response to a transmission signal transmitted toward the target; and
   a control unit that sets a gain of the receiving unit to a value at which the receiving unit is prevented from falling into a saturation region by a component of the transmission signal that wraps around the receiving unit through an aerial system used for transmitting the transmission signal, during a period in which the transmission signal is being transmitted.

2. A radar receiver, comprising:

a receiving unit that detects or demodulates a received signal for detecting a target, the received signal arriving from the target in response to a transmission signal transmitted toward the target; and

a control unit that sets a gain of the receiving unit to a value at which detection or demodulation of the received signal arrived from the target in response to the transmission signal is performed in an active region, during a period in which the transmission signal is being transmitted.

3. The radar receiver as set forth in claim 1 or 2, in which the control unit sets the gain of the receiving unit to a value at which the receiving unit is prevented from falling into a saturation region by the receiving signal that arrives from the target in response to the transmission signal, during another period subsequent to the period in which the transmission signal is being transmitted.

4. The radar receiver as set forth in any one of claims 1 to 3, further comprising a level monitoring unit that monitors a level distribution of the received signal in all or a part of a range direction, a scan direction, and a sweep direction, and in which the control unit sets the gain of the receiving unit to a value at which detection or demodulation of the received signal is performed by the receiving unit in an active region under the level distribution of the received signal.

5. The radar receiver as set forth in any one of claims 1 to 3, in which the control unit sets the gain of the receiving unit to a constant value, during the period in which the transmission signal is being transmitted.

6. The radar receiver as set forth in claim 2, further comprising an attenuation device that attenuates the received signal arrived from the target before the receiving unit detects or demodulates the received signal by an attenuation amount that is variable, and in which the control unit controls the attenuation amount of the attenuation device and sets the gain of the receiving unit to a value at which detection or demodulation of the received signal arrived from the target in response to the transmission signal is performed in an active region, during the period in which the transmission signal is transmitted.

7. The radar receiver as set forth in claim 6, in which the control unit is provided with an attenuation amount table which is set with the attenuation amount of the attenuation device.

8. The radar receiver as set forth in claim 6, in which the attenuation amount table is preliminarily registered with the attenuation amount to be set to the attenuation device in association with a range r within which positioning and distance-measurement of the target is to be performed and a width of a transmission pulse to be set in accordance with a sequence of a time series t in synchronization with the transmission signal.

9. The radar receiver as set forth in claim 6, in which the control unit is provided with an analog circuit constituted by a time constant circuit, a broken line approximation circuit or other circuit that generates a signal indicative of the attenuation amount and supplies the signal indicative of the attenuation amount to the attenuation device.

# FIG.1

EP 2 738 566 A1

FIG.2

(2-1) TRANSMISSION PULSE

TRANSMISSION PERIOD P

(2-2) RADAR SIGNAL PROCESSING

(2-3)

ATTENUATION AMOUNT SET IN THE VARIABLE ATTENUATOR 13 (a)

ATTENUATION AMOUNT SET IN THE VARIABLE ATTENUATOR 13 (b)

ATTENUATION AMOUNT SET IN THE VARIABLE ATTENUATOR 13 (c)

ATTENUATION AMOUNT SET IN THE VARIABLE ATTENUATOR 13 (d)

EP 2 738 566 A1

# FIG.3

RANGE r

m

2

1

TIME
SERIES t

ATT11

ATT12

ATT1n

19T

## INTERNATIONAL SEARCH REPORT

| International application No. |
|---|
| PCT/JP2012/004750 |

**A. CLASSIFICATION OF SUBJECT MATTER**
*G01S7/34*(2006.01)i

According to International Patent Classification (IPC) or to both national classification and IPC

**B. FIELDS SEARCHED**

Minimum documentation searched (classification system followed by classification symbols)
G01S7/00-7/42, G01S13/00-13/95

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2001-174542 A (Mitsubishi Electric Corp.),<br>29 June 2001 (29.06.2001),<br>paragraphs [0001] to [0010], [0017] to [0019];<br>fig. 1 to 2<br>(Family: none) | 1-3,5-6,9<br>4,7-8 |
| Y | JP 2000-98022 A (Mitsubishi Electric Corp.),<br>07 April 2000 (07.04.2000),<br>paragraphs [0001] to [0026], [0036] to [0037];<br>fig. 1 to 12<br>(Family: none) | 4 |
| Y | JP 4-318482 A (Furuno Electric Co., Ltd.),<br>10 November 1992 (10.11.1992),<br>paragraphs [0015] to [0018]; fig. 1 to 3<br>(Family: none) | 7-8 |

☐ Further documents are listed in the continuation of Box C.　　☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>12 October, 2012 (12.10.12) | Date of mailing of the international search report<br>23 October, 2012 (23.10.12) |
|---|---|
| Name and mailing address of the ISA/<br>Japanese Patent Office | Authorized officer |
| Facsimile No. | Telephone No. |

Form PCT/ISA/210 (second sheet) (July 2009)

13

**EP 2 738 566 A1**

**Patent documents cited in the description**

- JP 2001174542 A
- JP 2007256009 A